# EUROPEAN PATENT SPECIFICATION

(11) **EP 2 855 165 B1**
(45) Date of publication and mention of the grant of the patent: **04.11.2015**
(21) Application number: 13736672.0
(22) Date of filing: 14.05.2013
(51) Int. Cl.: B60B 35/12

(54) **TAPERED STUD USED FOR CONNECTING THE RING GEAR FLANGE TO THE AXLE HOUSING IN MOTOR VEHICLES**
KONISCHER BOLZEN ZUR VERBINDUNG DES ZAHNKRANZFLANSCHES AN DAS ACHSGEHÄUSE IN KRAFTFAHRZEUGEN
AXE EFFILÉ UTILISÉ POUR COUPLER LE BORD D'UNE COURONNE DENTÉE AU CARTER DE PONT DANS DES VÉHICULES À MOTEUR

(30) Priority: 01.06.2012 TR 201206436
(43) Date of publication of application: 08.04.2015
(73) Proprietor: Hidromek Hidrolik Ve Mekanik Makina Imalat Sanayi Ve Ticaret Anonim Sirketi, 06935 Ankara (TR)
(72) Inventor: ERDEN, Omer, Ankara (TR); BOZKURT, Hasan Basri, Ankara (TR)
(74) Representative: Iskender, Ibrahim
(86) International application number: PCT/TR2013/000136
(87) International publication number: WO 2013/180671

(56) References cited:
- DE-A1-102008 022 936
- US-A- 2 844 409
- US-B1- 6 322 157

## Description

### Technical Field

The present invention relates to a tapered stud used for connecting the ring gear flange provided in the final drive part of the axles of the motor vehicles to the housing of said axles.

### State of the Art

In the existing applications, ring gear flange is connected to the axle housing by the spline and nut couple or by a normal bolt and bushing system. Spline and nut system is expensive and requires special bench investments for manufacturing thereof. Bolt and bushing system on the other hand is far from being reliable and often leads to costly failures. Bolt bushings are interference fitted to the housing and broken or become loose during operation, resulting in loosed slots and bolts. Therefore, shearing of a large diameter stud without threads thereon is less likely to occur. Lastly, since the diameter of the bolt is identical everywhere, same degree of material removal is required in every section of the part to which said bolt is being fixed. In this case, when the bolt is wide or a great number of bolts are present, it will cause weakening of the material since more material removal will be required. Weakening of the material can result in significant strength problems.

An example of a ring gear flange connected to the axel housing by bolts is shown in patent US 6,322,157 B1.

Although a patent application having a tapered stud connection method similar to that of the present invention is not encountered, the TPE registered utility model application number 2007/04049 relates to a hole drilling apparatus comprising a surface ball having axial and surface balls therein to compensate horizontal and vertical forces, at least two (preferably three) drill sleeves having morse taper in the center thereof and main gear and transmission gear to provide same direction rotation of said drill sleeves.

### Objects of the Invention

The object of the present invention is to develop a tapered stud allowing for reliable connection of the ring gear flange located in the final drive part of the axles to the final drive housing or axle housing, having a wide pressing surface and enabling a high shear strength.

The present invention relates to the conical part of the tapered stud. This structure is defined as a morse taper. Today, morse taper structure is used in many structures. In particular, this tapered structure is employed in bit holders of lathe machines or in the bits.

The tapered stud according to the present invention will eliminate current disadvantages and will be used as a connection element for the first time in the axle system so as to provide additional advantages. Morse taper structure is defined as "self-holding". Self-holding characteristic can be explained as follows: The force that the bolt threads apply when engaged with the threads on the material is decomposed into vertical and horizontal components with respect to the tapered part and the holding characteristic is provided by the parallel one of said force components. Thus, displacement, loosening or dislocation of the tapered stud as in the case of a normal bolt does not take place. Shearing may occur on the surface where the axle housing and the ring gear flange are in contact with each other. If said surface is a non-threaded surface instead of a threaded surface, shearing possibility is considerably reduced. Therefore, tapered stud is more resistant to the shearing.

In addition, housing part is weakened less than the bolt connection thanks to the tapered structure. Since, the initial diameter and the diameter towards the end are different from each other. The diameter gradually decreases towards the interior part of the axle, thus, the amount of material removed and the weakening of the material is reduced.

### Description of the Figures

Figure 1 is the general cross-sectional view of the assembled ring gear and the axle housing.
Figure 2 is the detailed cross-sectional view of the assembled ring gear and the axle housing.

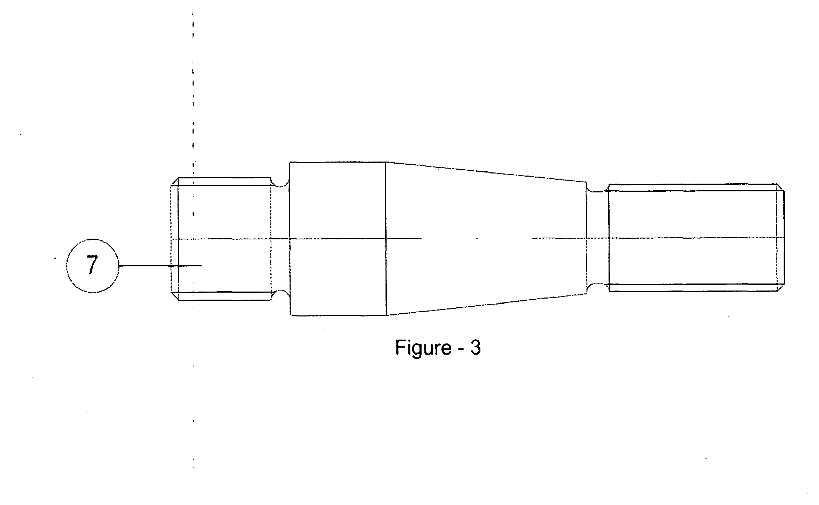

Figure 3 is the side view of the tapered connection element.

### Reference Numbers

**1.** Sun gear
**2.** Planet gear
**3.** Ring gear
**4.** Ring gear flange
**5.** Planet carrier
**6.** Hub
**7.** Tapered stud
**8.** Stud nut
**9.** Axle housing
10. Shaft
**11.** Hub swivel

### Detailed Description of the Invention

The present invention relates to the utilization of tapered studs (7) during fixing the ring gear flange (4), used to connect the ring gear (3) located in the axle part of the motor vehicles to the axle housing (9) to the hub swivel (11).

In a motor vehicle, a ring gear flange (4) is utilized for providing the connection between the hub swivel (11) and the ring gear (3). In the state of art, ring gear flange (4) is fixed to the hub swivel (11) by means of bolts. However, since the bolt threads are shear triggering structures and the bolt diameter is identical everywhere, same degree of material remove is required in every section of the part to which said bolt is being fixed. In this case, when the bolt is wide or a great number of bolts are present, undesired situations such as weakening of the material emerge due to the necessity of more material removal. Unlike the state of art, the connection between the ring gear flange (4) and the hub swivel (11) is provided by means of the tapered studs (7).

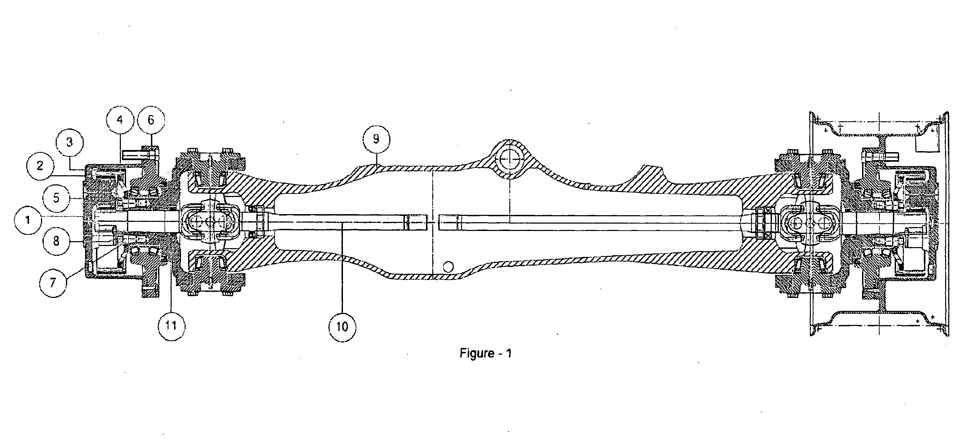

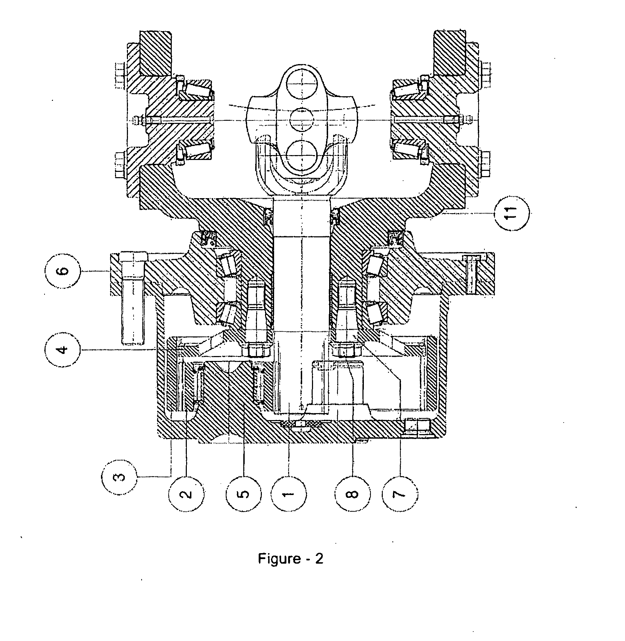

General and detailed views of the axle structure are given in Figure 1 and Figure 2. The names and functions of the constituent parts of this structure are respectively described. The gear rotating around the inner fixed axis of the gear assembly used during transmission of the motion from the shaft (10) to the wheels for rotation thereof is called the sun gear (1). Planet gears (2) are three gears located between the inner and outer part of the gear assembly used during transmission of the motion from the shaft (10) to the wheels for rotation thereof and rotating around their axes as well as around the sun gear (1). Ring gear (3) is the fixed outer gear of the gear assembly used during transmission of the motion from the shaft (10) to the wheels for rotation thereof. Ring gear flange (4) is the part located in between in order to fix the ring gear (3) to the hub swivel (11). Planet carrier (5) is the structure connected to the hub (6) on one end, connected to the planet gears (2) on the other end and transmitting the motion to the wheels by rotating. Hub (6) is the structure connected to the hub swivel (11) by means of bearings on one end, connected to the planet carrier (5) on the other end and transmitting the motion from the planet carrier (5) to the wheels.

The tapered studs (7) according to the present invention are interconnection elements fixing the ring gear flange (4) to the hub swivel (11). After the tapered studs (7) are placed, stud nuts (8) are put on the end of the tapered studs (7) remaining outside in order to fix the ring gear flange (4).

Axle housing (9) provides bearing of the shaft (10) and serves to receive the loads transmitted from the ground to the wheels. Shaft (10) is the solid cylindrical structure enabling transmission of the motion from the engine to the wheels by means of the final drive. Hub swivel (11) is part on the side where ring gear (3) is fixed to the axle by means of the ring gear flange (4).

Axle is the part passing through the center of the wheels and located transversely under the vehicle. Axle housing (9) is casted and connected to the chassis through the cavity provided in the middle and upper part thereof. The shafts (10) located in the cavity provided in the axle housing (9) transmit the motion from the engine to the right and left wheels by means of the final drive. The motion in the right and left shafts are transmitted to the outer part and thus, to the sun gears (1) by means of the spiders. The hub (6) provides tapered bearings rotational motion around the hub swivel (11). The hub (6) and the planet carrier (5) are fixed to each other via bolts. Planet carrier (5) provides rotation of the wheels by transmitting the motion from the planet gears (2) to the wheels. Rotation of the sun gear (1) provides rotation of the planet gears (2) inside the fixed ring gear (3). Fixing of the ring gear (3) is carried out as follows. Ring gear flange (4) is fixed to the ring gear (3) and then, this assembly is fixed to the hub swivel (11) by means of the tapered studs (7). In order to explain said fixing process in a more detailed manner, when the detail of the tapered stud (7) is examined threads on the head and end (on both ends) of the tapered stud (7) are observed. The part of the tapered stud (7) entering into the hub swivel (11) is fixed to the hub swivel (11) by means of the threads. In order to limit the movement of the ring gear flange (4), stud nuts (8) are placed on the ends remaining outside of the tapered stud (7) and fixed by tightening. The shearing problem between the hub swivel (11) and the ring gear flange (4) is eliminated by providing non threaded tapered stud (7) portions contacting with said parts. The tapered structure portion of the tapered stud (7) inside the hub swivel (11) provided less material removal, thus, a more robust hub swivel (11) due to the decrease in cross-sectional area of the tapered stud (7) towards the inner portions of the hub swivel (11).

## Claims

1. Axle structure comprising sun gear (1) rotating around the inner fixed axis of the gear assembly used during transmission of the motion from the shaft (10) to the wheels for rotation thereof, planet gears (2) located between the inner and outer part of the gear assembly used during transmission of the motion from the shaft (10) to the wheels for rotation thereof and rotating around their axes as well as around the sun gear (1), ring gear (3) being the fixed outer gear of the gear assembly used during transmission of the motion from the shaft (10) to the wheels for rotation thereof, ring gear flange (4) located in order to fix the ring gear (3) to the hub swivel (11), planet carrier (5) connected to the hub (6) on one end, connected to the planet gears (2) on the other end and transmitting the motion to the wheels by rotating, hub (6) connected to the hub swivel (11) by means of bearings on one end, connected to the planet carrier (5) on the other end and transmitting the motion from the planet carrier (5) to the wheels, axle housing (9) providing bearing of the shaft (10) and serving to receive the loads transmitted from the ground to the wheels, shaft (10) transmitting the motion from the engine to the wheels, and hub swivel (11) provided on the side where the ring gear (3) is fixed to the axle by means of the ring gear flange (4), tapered studs (7) are used to fix the ring gear flange (4) to the hub swivel (11), **characterized in that** the portion of the tapered stud (7) entering into the hub swivel (11) comprises a tapered structure and cross-sectional area of the stud decreases towards the inner portions of the hub swivel (11).

2. Axle structure according to claim 1, **characterized in that** threads are formed on the head and end of (on both ends of) the tapered stud (7).

3. Axle structure according to claim 1, **characterized in that** the tapered stud (7) portion being in contact with the hub swivel (11) and the tapered portion being in contact with the ring gear flange (4) are formed without threads.

4. Axle structure according to claim 1, **characterized in that** it comprises stud nut (8) placed on the end remaining outside of the tapered stud (7).

## Patentansprüche

1. Achsaufbau, umfassend ein Sonnenrad (1), das sich um die innere feste Achse eines Zahnradaufbaus, welcher während der Übertragung einer Bewegung von einer Welle (10) zu den Rädern, um diese zu drehen, verwendet wird, dreht, Planetenräder (2), die sich zwischen dem inneren und dem äußeren Teil des Zahnradaufbaus, welcher während der Übertragung der Bewegung von der Welle (10) zu den Rädern, um diese zu drehen, verwendet wird, angeordnet sind und sich um ihre Achsen wie auch um das Sonnenrad (1) drehen, einen Zahnkranz (3), bei dem es sich um das feste äußere Zahnrad des Zahnradaufbaus, welcher während der Übertragung der Bewegung von der Welle (10) zu den Rädern, um diese zu drehen, verwendet wird, handelt, einen Zahnkranzflansch (4), der angeordnet ist, um den Zahnkranz (3) an einem Nabenschwenkkopf (11) zu fixieren, einen Planetenträger (5), der an einem Ende mit der Nabe (6) verbunden ist und an dem anderen Ende mit den Planetenrädern (2) verbunden ist und die Bewegung zu den Rädern überträgt, indem er sich dreht, eine Nabe (6), die durch Lager an einem Ende mit dem Nabenschwenkkopf (11) verbunden ist und an dem anderen Ende mit dem Planetenträger (5) verbunden ist und die Bewegung von dem Planetenträger (5) zu den Rädern überträgt, ein Achsgehäuse (9), das eine Lagerung der Welle (10) bereitstellt und dazu dient, die Lasten, die von dem Boden zu den Rädern übertragen werden, aufzunehmen, die Welle (10), die die Bewegung von dem Motor zu den Rädern überträgt; und den Nabenschwenkkopf (11), der an jener Seite bereitgestellt, an der der Zahnkranz (3) durch den Zahnkranzflansch (4) an der Achse fixiert ist, wobei verjüngte Bolzen (7) verwendet werden, um den Zahnkranzflansch (4) an dem Nabenschwenkkopf (11) zu fixieren, **dadurch gekennzeichnet, dass** der Abschnitt des verjüngten Bolzens (7), der in den Nabenschwenkkopf (11) eindringt, einen verjüngten Aufbau aufweist und die Querschnittfläche des Bolzens zu den inneren Abschnitten des Nabenschwenkkopfs (11) hin abnimmt.

2. Achsaufbau nach Anspruch 1, **dadurch gekennzeichnet, dass** an dem Kopf und dem Ende (an beiden Enden) des verjüngten Bolzens (7) Gewinde gebildet sind.

3. Achsaufbau nach Anspruch 1, **dadurch gekennzeichnet, dass** der Abschnitt des verjüngten Bolzens (7), der mit dem Nabenschwenkkopf (11) in Kontakt steht, und der verjüngte Abschnitt, der mit dem Zahnkranzflansch (4) in Kontakt steht, ohne Gewinde ausgeführt sind.

4. Achsaufbau nach Anspruch 1, **dadurch gekennzeichnet, dass** er eine Bolzenmutter (8) umfasst, die an dem Ende angeordnet ist, das außerhalb des verjüngten Bolzens (7) zurückbleibt.

## Revendications

1. Structure d'axe comprenant un engrenage planétaire (1) tournant autour de l'axe intérieur fixe de l'engrenage utilisé pendant la transmission du mouvement de l'arbre (10) aux roues pour la rotation de celles-ci, des engrenages satellites (2) situés entre les parties intérieure et extérieure des engrenages utilisées pendant la transmission du mouvement de l'arbre (10) aux roues pour la rotation de celles-ci et tournant autour de leurs axes ainsi qu'autour de l'engrenage planétaire (1), une couronne (3) étant l'engrenage extérieur fixe des engrenages utilisé pendant la transmission du mouvement de l'arbre (10) aux roues pour la rotation de celles-ci, une bride de couronne (4) située dans le but de fixer la couronne (3) à l'axe de moyeu (11), un porte-satellites (5) relié au moyeu (6) à une extrémité, relié aux engrenages satellites (2) à l'autre extrémité, et transmettant le mouvement aux roues par la rotation, le moyeu (6) relié à l'axe de moyeu (11) au moyen de paliers à une extrémité, relié au porte-satellites (5) à l'autre extrémité et transmettant le mouvement du porte-satellites (5) aux roues, un logement d'axe (9) fournissant un palier de l'arbre (10) et servant à recevoir les charges transmises du sol aux roues, l'arbre (10) transmettant le mouvement du moteur aux roues, et l'axe de moyeu (11) prévu sur le côté où la couronne (3) est fixée à l'axe au moyen de la bride de couronne (4), des goujons coniques (7) sont employés pour fixer la bride de couronne (4) à l'axe de moyeu (11), **caractérisée en ce que** la partie du goujon conique (7) entrant dans l'axe de moyeu (11) comprend une structure conique et une surface transversale du goujon décroît en direction des parties intérieures de l'axe de moyeu (11).

2. Structure d'axe selon la revendication 1, **caractérisée en ce que** des filets sont formés sur la tête et l'extrémité (sur les deux extrémités) du goujon conique (7).

3. Structure d'axe selon la revendication 1, **caractérisée en ce que** la partie de goujon conique (7) en contact avec l'axe de moyeu (11) et la partie conique en contact avec la bride de couronne (4) sont formées sans filet.

4. Structure d'axe selon la revendication 1, **caractérisée en ce qu'**elle comprend un écrou de goujon (8) placé sur l'extrémité restant hors du goujon conique (7).
